(19) Europäisches Patentamt

European Patent Office

Office européen des brevets

(11) **EP 0 697 774 A1**

## EUROPEAN PATENT APPLICATION

(43) Date of publication:
21.02.1996 Bulletin 1996/08

(51) Int. Cl.⁶: **H04J 3/06**, H04L 7/00

(21) Application number: 94305995.6

(22) Date of filing: 15.08.1994

(84) Designated Contracting States:
CH DE DK FR GB IT LI SE

(71) Applicant: **Hewlett-Packard Company**
**Palo Alto, California 94304 (US)**

(72) Inventor: **Ferrandiz Bofill, Josep Maria**
**Henleaze, Bristol BS9 4LY (GB)**

(74) Representative: **Squibbs, Robert Francis et al**
**Stoke Gifford Bristol BS12 6QZ (GB)**

(54) **Clock offset estimation**

(57)     A method is provided for estimating the clock offset between two clocks located at first and second stations (A,B) respectively of a communications network. The method involves determining for each of a succession of update events that provide data concerning the offset between the clocks: a first measure $\theta_n$ which is a noisy measure of clock offset; a second measure $d_n$ indicative of the power of the noise in $\theta_n$; and a third measure $t_n$ indicative of the time interval between the update event and a preceding such event. The measures derived from each successive update event are used to effect a Kalman filtering update process spanning $K$ such events, to provide an updated offset estimate. The Kalman filtering process may also be used to derive an estimate of the error $V_n$ of the clock offset estimate, the first time derivative of offset, and an error estimate for the latter. A level of noise is preferably injected into the Kalman filter to provide the filter with a tracking ability, the magnitude of this noise being determined on the assumption that convergence has been achieved for the offset estimate error $V_n$.

## Description

### Field of the Invention

The present invention relates to a method of estimating the clock offset between two clocks located at first and second stations respectively of a communications network.

### Background of the Invention

The synchronisation of physically spaced clocks is required in a number of computer and communication applications. Thus, for example, if a super-computer is to be built by interconnecting several computers in a network and then used to run applications that need a tight clock synchronisation, it is necessary to provide some mechanism for synchronising the clocks at the individual computers. Another example where clock synchronisation is required is where it is desired to analyse a sequence of events taking place across a network where each event has been time-stamped by a different clock; such a situation might arise in relation to analysing a fault condition on a communication signalling network (for example, one operating according to the CCITT Signalling System No. 7 Recommendations).

Protocols that perform clock distribution across computer networks have been available for a number of years. The current IAB standard is the Network Time Protocol, NTP (see, for example, D.L. Mills : "Network Time Protocol (version 3), Specification, Implementation and Analysis", Network Working Group, RFC 1305, March 1992). The NTP is a general purpose clock distribution protocol that provides clock synchronisation to arbitrary computer networks and is actively used in the Internet. As such, its memory and processing requirements are low. For present purposes, the NTP can be considered as made up of a transmit process, a receive process, an update procedure and a local clock process. The update process generates the best offset available with reference to a selected reference clock by performing clock selection and combination. The local clock part uses the data generated by the update process to adjust the phase and frequency of the local oscillator with a PLL (Phase Locked Loop) which removes input data noise and provides a stable timescale between network updates.

The NTP outputs three quantities: a clock offset with respect to a selected reference clock, an offset error (dispersion) with respect to the selected reference clock, and the current round-trip delay to this reference clock. The offset error or dispersion can be decomposed in turn into several components:

1. - measurement errors due to inherent clock reading errors;
2. - errors accumulated since the last offset update due to skew errors (here, "skew" refers to the first derivative of the offset with respect to time);
3. - network errors due to delay jitter.

Normally, delay jitter errors dominate the dispersion budget. The NTP uses a type II PLL to minimise the delay jitter errors. However, PLLs have the problem that even if they work "well" in the sense of good tracking capabilities and acceptable errors, it is never known how much "better" one could do.

It is an object of the present invention to provide an improved clock offset estimation method.

### Summary of the Invention

According to the present invention, there is provided a method for estimating the clock offset between two clocks located at first and second stations respectively, the method involving the steps of:

a) determining for each of a succession of update events that provide data concerning the offset between said clocks,:

- a first measure $\theta_n$ for each update event, which is a noisy measure of said offset; and
- a second measure $t_n$ indicative of the relative time interval between the update event and a preceding such event;

b) using the measures derived from each successive update event to effect a Kalman filtering update process, spanning $K$ such events, to provide an updated offset estimate, the Kalman filtering process being based on the following system equations:

$$\theta_n = X_n + W_n, \ n \geq 0$$

$$X_{n+1} = X_n + t_n X'_n, \ n \geq 0$$

where $X_n$, $X'_n$ are respectively the clock offset and its first time derivative for the $n$th update event, and $(W_n)_{n \geq 0}$ represents a noise function in the form of a sequence of independent random variables with known upper bound; the first time derivative of offset being represented in the Kalman filtering update process as:

$$X'_n = \beta_n X_n$$

where:

$$\beta_n = (\beta_{n,1}, \ldots, \beta_{n,K})$$

$$X_n = (X_n, \ldots, X_{n-K+1})$$

$\beta_{n,k}$ being determined for each latest update event (for example, by a least squares method)

The system equations are not themselves in a form suitable for application of the Kalman recursions and it is the expression of $X'_n$ in terms of $\beta_n X_n$ that permits application of the recursions.

Preferably, the upper bound on the noise is determined for each update event by deriving a third measure $d_n$ in respect of that event.

The Kalman filtering process may also be used to derive an estimate of the error $V_n$ of the clock offset estimate, the first time derivative of offset, and an error estimate for the latter. Advantageously, a level of noise is injected into the Kalman filter such as to provide the filter with a tracking ability, the magnitude of this noise being determined on the assumption that convergence has been achieved for the offset estimate error $V_n$

In order to remove excessively noisy events from the process, the aforesaid third measure derived from each event is preferably compared with a threshold value and if this value is exceeded, the event is discarded. Advantageously, this threshold value is the average value of the third measure for at least the last $M$ preceding update events where $M$ is a positive integer.

The update events used to collect data may take a variety of forms. In one arrangement, each update event is a messaging event involving sending an outward message from the first station to the second station with the receipt of the outward message by the second station resulting in a corresponding return message being sent from the second station to the first. In this case, the method involves effecting a succession of messaging events, recording for these events the timings of message transmission and receipt at the two stations as judged against the corresponding said local clock, and determining from these timings for each messaging event:

- said first measure in dependence on the difference between the journey times for the outward and return messages associated with that event; and
- said second measure in dependence on the time interval between the messaging event and the preceding such event.

The messaging events may be effected individually or in groups; in the latter case, for each group, all but the messaging event with the lowest value of the sum of outward and inward message journey times, are discarded.

Preferably, the time between messaging events (or between groups of such events if the events are sent in groups), is set to a minimum value during the accumulation of timings on an initial $K$ messaging events, and is thereafter determined such that the error in offset estimate has grown with time only to a predetermined value before the next messaging event or group of such events, as applicable, is effected, provided that a certain minimum time has elapsed.

Advantageously, for each new offset estimate, a check is made as to whether the change in estimate between the new estimate and the preceding one is within a predetermined limit, the inter-event or inter-group time, as applicable, being set to a minimum if this limit is exceeded.

## Brief Description of the Drawings

A clock-offset estimation method according to the invention will now be described, by way of non-limiting example, with reference to the accompanying diagrammatic drawings, in which:

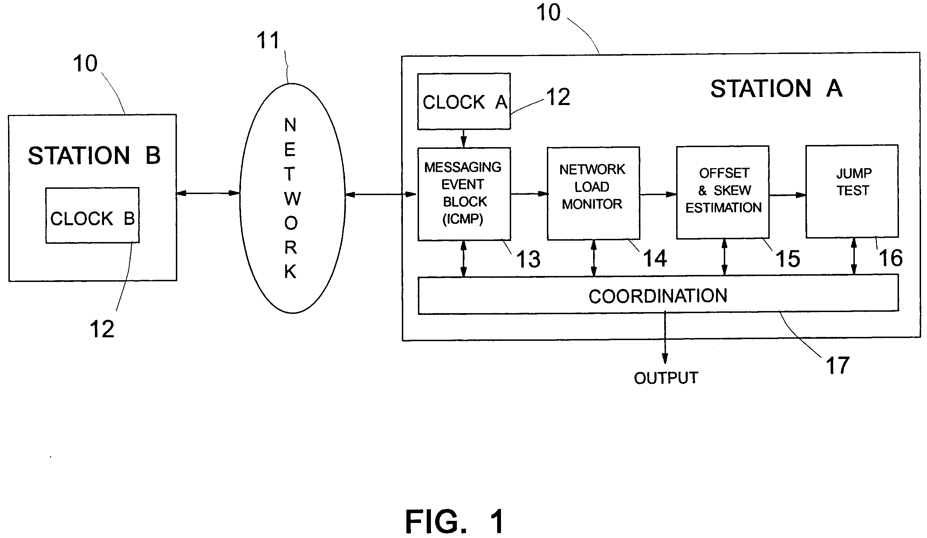

. Figure 1    is a diagram showing two stations A and B inter-communicating via a network, each station having its own clock;

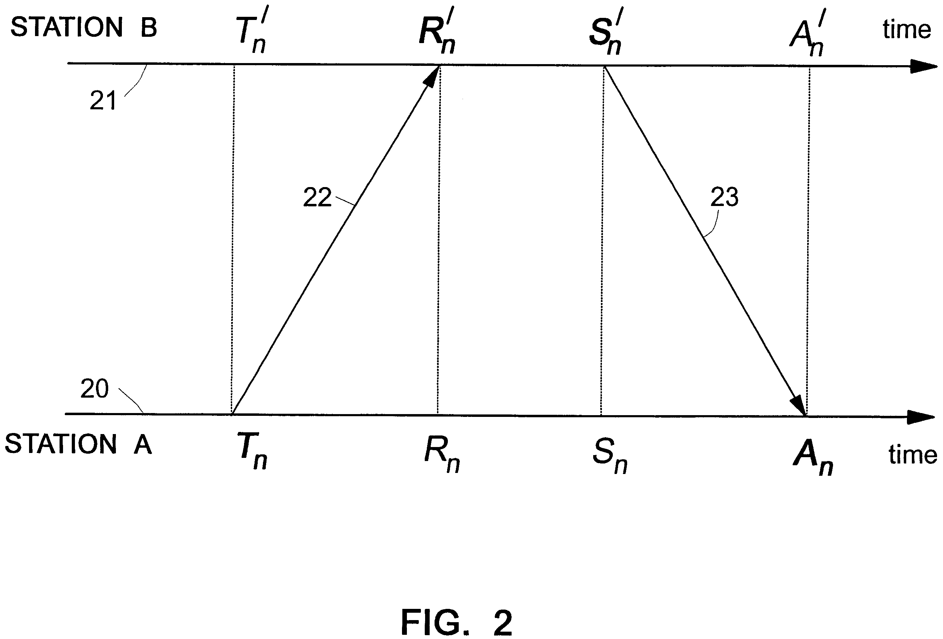

. Figure 2    is a diagram illustrating the timing of a message event as seen by the clocks at the two stations A and B; and

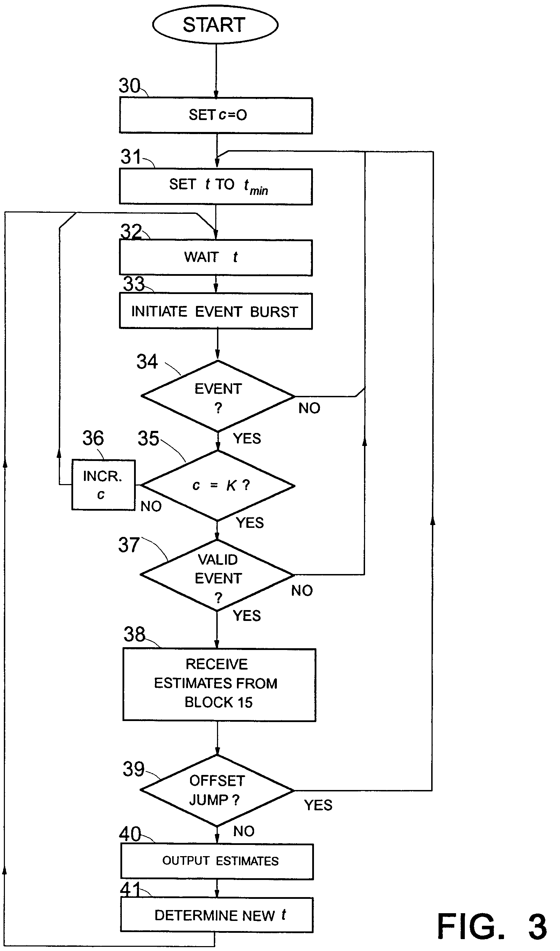

. Figure 3    is a flow chart illustrating the control effected over the time interval between the sending of bursts of messaging events.

## Best Mode of Carrying Out the Invention

Figure 1 illustrates the generalised situation to which the present clock-offset estimation method is applicable. Two stations 10, herein referred to as stations A and B, inter-communicate over a network 11. By way of example, the stations A and B may be computer workstations and the network 11 a LAN (Local Area Network) or a WAN (Wide Area Network).

Each station A, B has a local clock 12, herein designated clock A for station A and clock B for station B. In order to enable a correlation of events at the two stations A, B, it is necessary to know the offset of one clock 12 relative to the other. This offset will generally change with time and the first time derivative of the offset will hereinafter be referred to as the "skew"; the second time derivative of the offset will be referred to as "drift".

The clock-offset estimation method to be described enables an estimation to be made of the offset and skew between clocks A and B. Generally, one station (in this case, station A) actively carries out an estimate of the offset of its clock A relative to the clock 12 (in this case, clock B) of the other station (station B); station B may be considered as being a "time server" and station A as being a client of B.

This estimation process involves station A effecting a succession of messaging events between itself and station B. Each messaging event involves the sending of an outward message from station A (source station) to station B (destination station) and the return of a return message from station B to station A. Timings associated with at least some of these messaging events are recorded and then processed to derive a clock offset estimate.

In functional terms, station A can be considered as including, in addition to clock A, five blocks for effecting the estimation process. The blocks are a message event block 13 for sending and receiving message-event messages, a network load monitor 14 for discarding "noisy" messaging events, an offset and skew estimation block 15, a jump detection block 16, and a coordination block 17 for coordinating the operation of the other blocks. Where station A is a computer workstation, these blocks will generally be implemented by appropriate processes run on the workstation processor, the exception to this being the network interface hardware that conceptually forms part of block 13.

The functional blocks 13 to 17 will now be described in turn.

## Messaging Event Block 13

The messaging event block 13 is arranged to effect a series of messaging events, each involving sending a message and receiving the return message generated by station B. The time of sending of the outward message and of receipt of the return message are noted according to clock A whereas the time of receipt of the outward message and of sending back of the return message are noted according to clock B. General mechanisms for providing such a facility are known in existing network protocols such as the echoing and time-stamping mechanism of the ICMP protocol associated with the TCP/IP protocol suite; with such a mechanism, an outward message is time-stamped on sending by the clock at the sending station (station A) and the message is then echoed back, as a return message, from a remote station (station B) which appends its own time-stamps corresponding to the time of receipt and of echo back at the remote station. On receipt of the echoed-back message, the original sending station has the required timing information in the received message. It will, of course, be appreciated that the timing information can be passed from each station A, B to the means effecting offset estimation processing (whether or not part of station A) by mechanisms other than including time stamps in the outward and return messages.

In the present example, it is assumed that the stations A, B run the ICMP protocol and use its mechanisms to effect and time the messaging events, station B providing timestamps for both message receipt and echoback.

Referring now to Figure 2, the flow of a messaging event (taken as the $n^{th}$ such event) is illustrated relative to the time lines 20, 21 for clocks A and B respectively. Thus, an outward message (represented by line 22) is first sent from station A to station B which then sends back a return message (line 23) to station A. The time of sending of the outward message 22 is recorded as being at time $T_n$ by clock A (the suffix "n" indicating that the timing relates to an $n^{th}$ messaging event); note that in practice, time $T_n$ is slightly before the outward message is actually transmitted from station A, this interval being a handling interval needed by station A to effect transmission after timestamping at $T_n$. The receipt of the outward message 22 at station B is recorded by a time stamp at time $R'_n$ according to clock B (note that for clarity, timings according to clock B are primed); between receipt of the outward message 17 and $R'_n$ is a small handling interval. The sending by station B of the return message 23 is recorded by a time stamp at time $S'_n$; between $S'_n$ and transmission of the return message 23 is another small handling interval. The time of receipt of the return message at station A is recorded as time $A_n$ according to clock A, there again being a small handling interval between receipt of the return message and time $A_n$. The messaging event block 13 thus has available time values $T_n$, $R'_n$, $S'_n$, $A_n$ following the $n^{th}$ messaging event (note that if station B only provides one time stamp for message receipt and echoback, then $R'_n = S'_n$).

Generally, of course, there will be an offset between clocks A and B. Thus, when clock B records times $R'_n$, $S'_n$, clock A will show different values $R_n$, $S_n$ respectively. More particularly, if $X(t)$ is the clock offset at source time t (clock A time), then:

$$R_n = R'_n + X(R_n) \qquad\qquad (1)$$

4

$$S_n = S'_n + X(S_n) \tag{2}$$

Similarly, times $A_n$ and $T_n$ at the source (station A) correspond to times $A'_n$ and $T'_n$ at the destination (station B).

For the $n^{th}$ messaging event, block 13 calculates the quantities:

$$\text{Half round trip delay} \qquad d_n = \frac{(A_n - S'_n) + (R'_n - T_n)}{2} \tag{3}$$

$$\text{Packet Offset} \qquad \theta_n = \frac{(A_n - S'_n) - (R'_n - T_n)}{2} \tag{4}$$

The quantities $d_n$ and $\theta_n$ are be directly computed from the timestamps.

The larger $d_n$, the "noisier" the offset information of the $n^{th}$ messaging event. In order to reduce the noise (that is, to reduce the half round trip delay $d_n$), rather than sending isolated messaging events, block 13 is arranged to send bursts each of several messaging events, with, for instance, the events in a burst being separated by about one second. The first messaging-event packet in a burst acts as a "warning shot" and has the effect of moving the destination address into the cache of routers in the network. As a result, subsequent messaging-event packets of the same burst normally end up with a smaller half round trip delay. For every burst of messaging events, block 13 selects the messaging event with the smallest value of $d_n$.

Thus, for the $n^{th}$ burst of messaging events, the block 13 selects the messaging event with the smallest value of $d_n$ and treats this selected messaging event as the $n^{th}$ messaging event; block 13 then proceeds to output the following values for this selected event:

$$d_n \; \theta_n \; T_n \; A_n$$

Network Load Monitor 14

The network load monitor 14 tracks the network load. The network load is estimated from the half round trip delay values. Upon output of the $n^{th}$ messaging event data by block 13, the load monitor 14 first uses the half round trip delay value $d_n$ to update an admission threshold $\Delta$ to a new value $\Delta_n$. Preferably, $\Delta_n$ is computed as the average half round trip delay seen over the last $M$ selected messaging events from the last $M$ messaging-event bursts. It is the value of $M$ rather than which average (e.g. arithmetic mean, median,...) that plays an important in monitoring the network load, a large value of $M$ making the monitor less adaptable and a small one making the monitor redundant ($M = 1$ would mean that each messaging event would always be accepted).

After the threshold value $\Delta_n$ has been updated, the value of $d_n$ is compared to the threshold. If $d_n$ is less than $\Delta_n$ then the $n^{th}$ selected messaging event is considered valid and the values output from block 13 are passed to the estimation block 15 for clock offset and skew estimation; otherwise, the $n^{th}$ messaging event is discarded and the coordination block 17 informed. In this latter case, the coordination block 17 initiates a new messaging event burst by the block 13.

Offset and Skew Estimation Block 15

Block 15 estimates the clock offset $X(t)$ and the clock skew $X'(t)$ from the valid selected messaging event observations $(d_n, \theta_n, T_n, A_n)$, $n \geq 0$. This is carried out using Kalman filtering as described below.

Clock Offset Model, Assumptions and Notation

**Evolution Equation:**

It is assumed that the clock offset $X(t)$ at source time $t$ has an evolution equation of the form:

$$X(t) = x + \int_0^t X'(s)\,ds \tag{5}$$

the quantity $X(0)$ being called the initial clock offset and the function $X'()$ being the clock skew (first time derivative of offset).

**Assumptions:**

(1) - the drift (that is, the second time derivative of offset) is practically zero so that between two consecutive valid messaging events, the clock skew remains practically constant;

(2) - the clock skew per unit time is assumed to be very small (a few parts per million):

$$|X'(t)| << 1, \; t \geq 0$$

(3) - protocol stack processing and routing delays (source-destination; destination-source) are on average symmetrical.

Assumption (3) is often not met in practice; however, this is not critical as this only leads to a constantly biased offset value, the bias being dependent on the degree of asymmetry. In contrast, assumptions (1) and (2) are more critical in nature (but see later for how a failure of assumption (1) can be handled).

**Notation:**

Let:

$$X_n = X(\,(A_n + T_n)/2)$$

$$X'_n = X'(t), \; (A_n + T_n)/2 \leq t < (A_{n+1} + T_{n+1})/2$$

Basic Equations

**Single-Event Equation** - The first equation that can be set down for relating messaging event data to the clock offset model, concerns each event taken in isolation. The quantity $\theta_n$ (which is half of the difference between outward and inward packet journey times) would actually be a true measure of clock offset were it not for the variations from the symmetry assumptions noted above that affect any single messaging event. It may therefore be said that:

$$\theta_n = X_n + W_n, \; n \geq 0 \tag{6}$$

where $(W_n)_{n \geq 0}$ represents a sequence of independent variables of zero mean (if assumption 3 holds) bounded by $d_n$ and with variance $(\sigma_n)^2$. $W_n$ is called the measurement noise. The initial value $X_0$ is a random variable of mean $\theta_0$ and variance $(\sigma_0)^2$.

**Event-Sequence Equation** - The second equation that can be derived for linking the measurement results with the offset model, concerns changes taking place from one messaging event to the next. Clearly, the offset at event (n+1) will be related to the offset at event (n) by the clock skew (first time derivative of offset); however, there will also be some randomising factor involved. The second equation has the form:

$$X_{n+1} = X_n + t_n X'_n + W'_{n+1}, \; n \geq 0 \tag{7}$$

where:

$$t_n = (A_{n+1} + T_{n+1})/2 - (A_n + T_n)/2, \; n \geq 0 \tag{8}$$

and $(W'_n)_{n \geq 1}$ represents a sequence of independent zero mean random variables with variance $(v_n)^2$. $W'_n$ is called the driving noise. The random variable sequences $W_n$ and $W'_n$ are independent of each other.

Kalman Filtering

Based on equations (6) and (7) above, a Kalman filter is provided to recursively compute the clock offset estimate:

$$\hat{X}_n = E[X_n | \Theta_0, \ldots, \Theta_n], \quad n \geq 0,$$

and the mean square error:

$$V_n^2 = \mathbb{E}[(X_n - \hat{X}_n)^2], \quad n \geq 0.$$

In this process, the clock skew (the first time derivative of offset) is estimated from the measurement data. More generally, there may be situations where it is important to capture the offset dependency on the skew, the drift and higher derivatives (this would permit assumption (1) above to be breached); in the following it is shown how this can be done with a $K$ dimensional Kalman filter though, for clarity, it is assumed that only the skew is needed (the same approach being usable for higher order time derivatives).

**Offset Estimate** - First, the skew is written as:

$$X'_n = \beta_n X_n \tag{9}$$

where:

$$\beta_n = (\beta_{n,1}, \ldots, \beta_{n,K}) \tag{10}$$

$$X_n = (X_n, \ldots, X_{n-K+1}) \tag{11}$$

The system equations (6) and (7) can now be rewritten in the following form (superscript $T$ denoting the transposition operator):

$$\theta_n = H^T X_n + W_n, \ n \geq 0 \tag{12}$$

$$X_{n+1} = F_n X_n + W'_{n+1}, \ n \geq 1 \tag{13}$$

where:

$$H = (1,0,\ldots,0)^T \tag{14}$$

$$\boldsymbol{F_n} = \begin{pmatrix} 1+\alpha_{n,1} & \alpha_{n,2} & \cdots & \alpha_{n,K-1} & \alpha_{n,K} \\ 1 & 0 & \cdots & 0 & 0 \\ 0 & 1 & \ddots & 0 & 0 \\ 0 & 0 & \ddots & 0 & 0 \\ 0 & 0 & \cdots & 1 & 0 \end{pmatrix}, \tag{15}$$

$$W'_{n+1} = (W'_{n+1},0,\ldots,0)^T \tag{16}$$

$$\alpha_{n,i} = t_n \beta_{n,i} \tag{17}$$

If
denotes the estimate of $\boldsymbol{X}_n$ given $\theta_0, \ldots, \theta_n$, and the matrix $\boldsymbol{C}_n$ denotes the $K \times K$ covariance matrix of $\boldsymbol{X}_n$, that is:
then the theory of Kalman filtering provides formulas for the updates of $\boldsymbol{C}_n$ and $\hat{\boldsymbol{X}}_n$ at time $A_{n+1}$.

These updates are as follows:

$$\hat{X}_{n+1} = F_n\hat{X}_n + \left( \frac{(F_nC_nF_n^{\mathrm{T}} + Q_{n+1})H}{(\sigma_{n+1})^2 + (\nu_{n+1})^2 + V_n^2 + \alpha_n^2} \right) (\Theta_{n+1} - H^{\mathrm{T}}F_n\hat{X}_n) \qquad (19)$$

$$C_{n+1} = (F_nC_nF_n^{\mathrm{T}} + Q_{n+1}) - \frac{(F_nC_nF_n^{\mathrm{T}} + Q_{n+1})HH^{\mathrm{T}}(F_nC_nF_n^{\mathrm{T}} + Q_{n+1})}{(\sigma_{n+1})^2 + (\nu_{n+1})^2 + V_n^2 + \alpha_n^2} \qquad (20)$$

where:

$$V_n^2 = H^{\mathrm{T}}C_nH \qquad (21)$$

$$\alpha_n^2 = \alpha_nC_n\alpha_n^{\mathrm{T}} \qquad (22)$$

$$\alpha_n = (\alpha_{n,1} \dots \alpha_{n,K}) \qquad (23)$$

$$Q_{n+1} = \mathrm{diag}\{v_n^2, 0, \dots, 0\} \qquad (24)$$

The initial values are set after the first $K$ messaging events as:

$$\hat{X}_0 = (\Theta_{-k+1}, \dots, \Theta_0)^{\mathrm{T}} \qquad (25)$$

$$C_0 = \mathrm{diag}\{(\sigma_{-K+1})^2, \dots, (\sigma_0)^2\} \qquad (26)$$

$$Q_0 = \mathrm{diag}\{(v_0)^2, 0, \dots, 0\} \qquad (27)$$

The offset estimate at time $(A_{n+1} + T_{n+1})/2$ is:

$$\hat{X}_{n+1} = \hat{X}_n + t_n\hat{X}'_n + (J_{n+1})^2(\Theta_{n+1} - (\hat{X}_n + t_n\hat{X}'_n)) \quad n \geq 0 \qquad (28)$$

and its mean square error is:

$$(V_{n+1})^2 = (\sigma_{n+1})^2(J_{n+1})^2 , \quad n \geq 0 \qquad (29)$$

where:

$$(J_{n+1})^2 = \frac{(v_{n+1})^2 + V_n^2 + \alpha_n^2}{(\sigma_{n+1})^2 + (v_{n+1})^2 + V_n^2 + \alpha_n^2} \qquad n \geq 0 \qquad (30)$$

**Skew Estimation** - To enable the clock offset to be derived according to the above formulae, the vector $\beta_n$ is estimated using a least squares estimate. If $E = (e_{ij})$ is the $(K-1) \times K$ matrix given by :

$$1 \text{ if } i = j \qquad (31)$$

$$e_{ij} = -1 \text{ if } j = i+1$$

0 otherwise

where $1 \leq i \leq (K-1)$ and $1 \leq j \leq K$, then the $(K-1)$ vector with i-th component,

$$(\hat{X}_{n-i+1} - \hat{X}_{n-i})/t_{n-i},$$

$1 \leq i \leq K$ can be written as $T_n \hat{X}_n$ where $T_n = \text{diag}\{1/t_{n-1}, .... 1/t_{n-K+1}\} E_n$.

The covariance matrix $G_n$ of the random vector $T_n \hat{X}_n$ is equal to:

$$G_n = T_n C_n T_n^{T} \tag{32}$$

The function to minimise in order to obtain a least squares estimate of $\beta$ and of $X'_n$ is:

$$\chi^2 = (T_n \hat{X}_n - X'_n e)^T G_n^{\#} (T_n \hat{X}_n - X'_n e) \tag{33}$$

where $G_n^{\#}$ is the generalised inverse matrix of $G_n$ and $e = (1, ...,1)^T$. From this it can be shown that the clock skew estimate is then:

$$\hat{X'}_n = \left( \frac{e^T G_n^{\#} T_n}{e^T G_n e} \right) \hat{X}_n \tag{34}$$

and thus,

$$\beta_n = \frac{e^T G_n^{\#} T_n}{e^T G_n^{\#} e} \tag{35}$$

and the skew variance is given by:

$$(\sigma_{\hat{X}'_n})^2 = \text{Var}(\hat{X}'_n) = \frac{1}{e^T G_n^{\#} e} \tag{36}$$

**Dynamic Behaviour** - There is a trade-off between the Kalman filter tracking ability and the Kalman filter error estimate. The driving noise power $(v_n)^2$ is used to control this trade-off. If the driving noise is too large, $V_n^2$ tends to a value that is unneeessarily large. The question to address is what is the right power of driving noise that needs to be injected into the Kalman filter to preserve its tracking ability without creating error estimates that are unnecessarily large.

The injection noise level used is that which would correspond to having achieved error convergence, that is, $V_n = V_{n+1}$. Then, at the reception of the (n+1)th messaging event, the level of noise to be injected into the Kalman filter is given by:

$$(v_{n+1})^2 = \left[ \frac{V_n^4}{(\sigma_{n+1})^2 - V_n^2} - \alpha_n^2 \right]^+ \tag{37}$$

where $[x]^+ = \max \{0, x\}$.

This approach seems to enhance the tracking capability of the filter at the expense of the offset error performance. This is justified since the errors obtained by the Kalman filter are normally an order of magnitude below the half-round trip delay.

Implementation

For the (n+1)th valid messaging event, the estimation block 15 has the following new data to work with:

$d_{n+1}$ - the half round trip time which provides an upper bound on the measurement noise; it is generally used to determine the standard deviation of the measurement noise when evaluating the above formulae;

$\theta_{n+1}$ - the packet offset;

$t_n$ - the inter-event time (derived according to equation 8 above).

This data is then used to update the offset estimate as follows:

1) the matrix $F_n$ is determined by:

- calculating the vector $\beta_n$ using formula (35);
- calculating $\alpha_{n,i}$ using formula (17);
- calculating $F_n$ using formula (15);

2) the matrix $Q_{n+1}$ is determined by:

- calculating the driving noise power $(v_{n+1})^2$ using formula (37), the value of $V_n$ having been determined in relation to the previous messaging event;
- calculating $Q_{n+1}$ using formula (24);

3) the value of $\alpha_n^2$ is determined using formula (22), the value of $C_n$ having been determined in relation to the previous messaging event;

4) the offset is estimated using formula (19);

5) the mean square error of the offset is estimated by:

- determining the value of $(J_{n+1})^2$ using formula (30);
- determining the mean square error using formula (29);

6) a skew estimate is derived using formula (9) together with an estimate of its mean square error using formula (36);

7) the value of $C_{n+1}$ is determined using formula (20).

It will be appreciated that the numerical computations of the $K$ dimensional Kalman filter need to be done carefully in order to avoid numerical problems (such as division by zero); appropriate techniques for avoiding such problems will be apparent to persons skilled in the art.

Jump Test Block 16

A highly unexpected value of $\theta_n$ may indicate a drastic change in the network behaviour or conditions; in particular, it may indicate a jump in the value of clock offset. Clock offset jumps will generally be rare and much larger than fluctuations due to noisy data. Block 16 tests for such jumps and if one is detected, block 16 informs the coordination block 16 which sets the inter-burst time to minimum to obtain further data as quickly as possible.

The jump test carried out by block 16 also has the function of ensuring that the Kalman filter maintains its tracking abilities - if it does not, then this will be picked up by the jump test.

The nature of the jump test is as follows (this being one example only, other tests being possible). On the basis that the clock skew will only vary slowly with time, the hypothesis:

$$H_0 : X_{n+1} = X_n + t_n X'_n \tag{38}$$

against the hypothesis:

$$H_1 : X_{n+1} \neq X_n + t_n X'_n \tag{39}$$

If hypothesis $H_0$ holds, then it is taken that no offset jump has occurred. Under hypothesis $H_0$, it may be expected that:

$$\theta_{n+1} \approx H^T(F_n X_n + W'_{n+1}) + W_{n+1} \tag{40}$$

and since $\theta_{n+1}$

$$Y_{n+1} = \frac{\theta_{n+1} - H^T F_n \hat{X}_n}{\sqrt{(\sigma_{n+1})^2 + (\nu_{n+1})^2 + V_n^2 + \alpha_n^2}} \qquad (41)$$

and $X_n$ are independent, it follows that the quantity: has zero mean and unit variance; hypothesis $H_0$ can be rejected if, for example, $|Y_{n+1}| > z$, where $z$ is a pre-specified value.

The numerator in formula (41) is the absolute size of the clock offset jump. Thus if one is interested in detecting jumps of a fixed size, regardless of the normalisation introduced by the denominator of formula (41), it suffices to compare the numerator in formula (41) with the fixed size threshold of interest.

If hypothesis $H_0$ is accepted no action is taken. However, if hypothesis $H_0$ is rejected, the coordination block 17 is informed.

Coordination Block 17

The coordination block 17 coordinates the operation of the other blocks and, in particular, controls the time between message-event bursts in dependence on how well the estimation process is doing according to feedback provided by the other blocks. Clearly, at start up when data on $K$ valid selected messaging events is required to start off the Kalman filter, the inter-burst time is preferably set at a minimum; however, once a steady state condition has been achieved, then the inter-burst time will depend on the allowable level of error for the offset estimate (the longer the time between bursts, the greater the potential error). More particularly, the offset error $t$ time units after time $(A_n + T_n)/2$ is given by:

$$V^2(t) = (H^T + t\beta_n)C_n(H^T + t\beta_n)^T \qquad (42)$$

where:

$$V^2(0) = V_n^2 = H^T C_n H \qquad (43)$$

is the offset error at time $(A_n + T_n)/2$

The offset error increase will typically be controlled not to exceed a value $\varepsilon d_n$ where $\varepsilon$ is a preassigned quantity. If $(\varepsilon^2 d_n^2 - V_n^2) > 0$, the $(n + 1)$th burst will be sent $t$ time units after the $n$th burst, where $t$ is the positive solution of:

$$(\sigma_{\hat{X}'_n})^2 t^2 + 2bt - (\varepsilon^2 d_n^2 - V_n^2) \qquad (44)$$

where

$$b = \beta_n C_n H = H^T C_n \beta_n^T.$$

Since usually

$$(\sigma_{\hat{X}'_n})^2 << b^2$$

and since also there will be a minimum allowable time $t_{min}$ between bursts, the inter-burst time $t$ will be set such that:

- if $(\varepsilon^2 d_n^2 - V_n^2) > 0$, $t$ is the greater of:

$$\frac{(\sigma_n^2 \varepsilon^2 - V_n^2)}{\beta C_n H + H^T C_n \beta_n^T}$$

    and

    $t_{min}$

- otherwise, $t = t_{min}$

Figure 3 is a flow chart illustrating the operation of the coordination block 17 in controlling the sending of message-event bursts by block 13. At startup, a counter has its value $c$ set to zero (step 30); this counter is used to count the number of accumulated valid messaging events ($K$ such events being required to start off the Kalman filter). Next, the inter-bust time $t$ is set to $t_{min}$ (step 31) and after time $t$ (step 32) the coordination block 17 triggers the block 13 (step 33) to send a messaging event burst.

If block 13 receives no return message from station B then this is reported to the coordination block 17 and block 17 returns to step 31 (see step 34).

If, however, at least one return message is received by block 13 for the messaging-event burst, block 17 is informed that a messaging event has been effected and block 17 then proceeds to check the count value $c$ (step 35) If $c$ is less than the required number $K$ needed to run the Kalman filter, the value of $c$ is incremented (step 36) and block 17 returns to step 32; however, if $c$ equals $K$, then block 17 awaits a "valid event" indication from the network load monitor 14.

If the network load monitor 14 reports that no valid messaging event results from a burst (tested in step 37) , then block 17 returns to step 31. However, if a valid messaging event is reported, block 17 next awaits receipt of the new offset, skew and error estimates from the estimation block 15 (step 38).

Thereafter, if block 16 reports that no offset jump has been detected (tested in step 39), block 15 proceeds to output the offset estimate (step 40) and determine a new value for $t$ (step 41) before returning to step 32. In the presence of an offset jump, block 15 returns to step 31.

It should be noted that the offset estimate determined by block 15 is the offset at time $(A_n + T_n)/2$. The offset estimate at time $A_n$ is determined by taking account of the offset change due to the value of the skew over the period $(A_n - T_n)/2$. The offset at any intermediate time between two estimates can be similarly derived.

### Variance Estimation

In the foregoing, the variance $\sigma_n^2$ of the measurement noise $W_n$ was equated to its known upper bound $d_n^2$. However, the quantity $Y_{n+1}$ introduced in formula (41) must have a variance of 1 which is not achieved with $\sigma_{n+1} = d_{n+1}$ because $\sigma_{n+1}$ is too high. It is, in fact, possible to define a parameter $\gamma$, between 1 and 0 in value, such that if $\sigma_{n+1} = \gamma d_{n+1}$ then the variance of $Y_{n+1}$ is equal to 1. Furthermore, in this case, all variances are scaled by $\gamma$; as a result, the offset error $V_n^2$ which was previously derived using $\sigma_n^2 = d_n^2$, now becomes scaled down to $\gamma^2 V_n^2$.

The value of $\gamma$ is estimated for the $n$th valid messaging event as the running variance of all the quantities $Y_n$ to date, where the quantities ($Y_n$) comprise the sequence of values obtained from formula (41) with $\sigma_n = d_n$.

### Variants

It will be appreciated that many variants are possible on the foregoing. For example, the steps taken to exclude noisy messaging events may be omitted, though again this is not preferred.

Although in the described embodiment, messaging events have been used to collect the measurement data to which the Kalman filtering process is applied, it is possible to collect the necessary update data in other ways. For example, one station might periodically inform the other of what it thinks its offset is; alternatively, in appropriate circumstances one could infer the offset of a station by the way it generated traffic. The update measures required are an offset measure $\theta_n$ (which will inherently be noisy), an upper bound $d_n$ on the noise of the offset measure, and a knowledge of the time between successive update measures. With regard to the upper bound on the noise power in the offset measure, if the environment concerned is sufficiently well known, it is feasible to dispense with making an upper bound measure for each update and simply use a predetermined value; however, this is not preferred.

## Claims

1. A method of estimating the clock offset between two clocks located at first and second stations respectively of a communications network, said method comprising the steps of:

   a) determining for each of a succession of update events that provide data concerning the offset between said clocks,:

   - a first measure $\theta_n$, for each update event, which is a noisy measure of said offset; and
   - a second measure $t_n$ indicative of the relative time interval between the update event and a preceding such event;

   b) using the measures derived from each successive update event to effect a Kalman filtering update process, spanning $K$ such events, to provide an updated offset estimate, the Kalman filtering process being based on the following system equations:

$$\theta_n = X_n + W_n, \; n \geq 0$$

$$X_{n+1} = X_n + t_n X'_n, \; n \geq 0$$

where $X_n$, $X'_n$ are respectively the clock offset and its first time derivative for the $n$th update event, and $(W_n)_{n \geq 0}$ represents a noise function in the form of a sequence of independent random variables with known upper bound; the first time derivative of offset being represented in the Kalman filtering update process as:

$$X'_n = \beta_n X_n$$

where:

$$\beta_n = (\beta_{n,1}, \ldots \ldots, \beta_{n,K})$$

$$X_n = (X_n, \ldots \ldots, X_{n-K+1})$$

$\beta_{n,k}$ being determined for each latest update event.

2. A method according to claim 1, wherein said upper bound on the noise is determined for each update event by deriving a third measure $d_n$ in respect of that event.

3. A method according to claim 2, wherein said Kalman filtering process is also used to derive an estimate of the error $V_n$ of the clock offset estimate.

4. A method according to claim 3, wherein a level of noise is injected into the Kalman filter such as to provide the filter with a tracking ability, the magnitude of this noise being determined on the assumption that convergence has been achieved for the offset estimate error $V_n$

5. A method according to claim 2, wherein an estimate is also made of the value of the first time derivative of the offset by using covariance data obtained from the Kalman filtering process.

6. A method according to claim 1, wherein between offset estimates, the actual current clock offset is estimated by combining the latest offset estimate with a component dependent on the lapsed time since that estimate and the first time derivative of the offset.

7. A method according to claim 2, wherein a said update event is discarded if the said third measure derived therefrom exceeds a predetermined value.

8. A method according to claim 7, wherein said predetermined value is the average value of said third measure for at least the last $M$ preceding update events where $M$ is a positive integer.

9. A method according to any one of the preceding claims, wherein each said update event is a messaging event involving sending an outward message from said first station to said second station with the receipt of said outward message by the second station resulting in a corresponding return message being sent from the second station to the first; the method involving effecting a succession of said messaging events, recording for these events the timings of message transmission and receipt at the two stations as judged against the corresponding said local clock, and determining from said timings for each messaging event:

   - said first measure in dependence on the difference between the journey times for the outward and return messages associated with that event; and
   - said second measure in dependence on the time interval between the messaging event and the preceding such event.

10. A method according to claim 9, wherein said messaging events are effected in groups each of at least two messaging events, and for each group, all but the messaging event with the lowest value of the sum of outward and inward message journey times, are discarded.

11. A method according to claim 9 or claim 10, wherein the time between messaging events or between groups of such events if the events are sent in groups, is set to a minimum value during the accumulation of timings on an initial $K$

messaging events, and is thereafter determined such that the error in offset estimate has grown with time only to a predetermined value before the next messaging event or group of such events, as applicable, is effected, provided that a certain minimum time has elapsed.

12. A method according to claim 11, wherein for each new offset estimate, a check is made as to whether the change in estimate between the new estimate and the preceding one is within a predetermined limit, the inter-event or inter-group time, as applicable, being set to a minimum if said limit is exceeded.

FIG. 1

EP 0 697 774 A1

STATION B  $T_n'$  $R_n'$  $S_n'$  $A_n'$  time

21

22

23

20

STATION A  $T_n$  $R_n$  $S_n$  $A_n$  time

FIG. 2

EP 0 697 774 A1

START

30 — SET c=0

31 — SET t TO $t_{min}$

32 — WAIT t

33 — INITIATE EVENT BURST

34 — EVENT ? — NO

YES

36 — INCR. c

35 — c = K ? — NO

YES

37 — VALID EVENT ? — NO

YES

38 — RECEIVE ESTIMATES FROM BLOCK 15

39 — OFFSET JUMP ? — YES

NO

40 — OUTPUT ESTIMATES

41 — DETERMINE NEW t

FIG. 3

## EUROPEAN SEARCH REPORT

European Patent Office

Application Number

EP 94 30 5995

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | IEEE TRANSACTIONS ON COMMUNICATIONS, vol.39, no.10, October 1991, NEW YORK (US) pages 1482 - 1493 DAVID L. MILLS 'Internet time synchronization: The network time protocol.' * page 1485, column 1, paragraph A - column 2 * * page 1488, column 1, paragraph IV - page 1490, column 1 * | 1 | H04J3/06 H04L7/00 |
| Y | JOURNAL OF RESEARCH OF THE NATIONAL BUREAU OF STANDARDS, vol.88, no.1, January 1983, WASHINGTON (US) pages 3 - 16 PETER V. TRYON ET AL. 'Estimation of parameters in models for Cesium beam atomic clocks.' * page 3, line 1 - page 4, line 23 * * page 6, line 1 - page 8, line 42 * | 1 | |
| A | SIAM JOURNAL ON SCIENTIFIC AND STATISTICAL COMPUTING, vol.8, no.1, January 1987, PHILADELPHIA (US) pages 71 - 81 RICHARD JONES ET AL. 'Continuous time series models for unequally spaced data applied to modeling atomic clocks.' * page 74, line 17 - page 75, line 4 * * page 75, line 41 - page 77, line 7 * | 1 | TECHNICAL FIELDS SEARCHED (Int.Cl.6) H04J G04G H04L |

The present search report has been drawn up for all claims

| Place of search | Date of completion of the search | Examiner |
|---|---|---|
| THE HAGUE | 27 January 1995 | Van den Berg, J.G.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)